# FASCICULE DE BREVET EUROPEEN

(11) **EP 2 804 749 B1**
(45) Date de publication et mention de la délivrance du brevet: **22.06.2016**
(21) Numéro de dépôt: 13704159.6
(22) Date de dépôt: 16.01.2013
(51) Int. Cl.: B29D 30/24

(54) **TAMBOUR D'ASSEMBLAGE D'UNE EBAUCHE DE PNEUMATIQUE PRESENTANT DES ELEMENTS MOBILES**
AUFBAUTROMMEL FÜR REIFENROHLING MIT BEWEGLICHEN ELEMENTEN
ASSEMBLY DRUM FOR A GREEN TYRE HAVING MOBILE ELEMENTS

(30) Priorité: 20.01.2012 FR 1250570
(43) Date de publication de la demande: 26.11.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: LEBLANC, Dominique, 63040 Clermont-Ferrand Cedex 9 (FR)
(74) Mandataire: Noel, Luminita
(86) Numéro de dépôt international: PCT/FR2013/050093
(87) Numéro de publication internationale: WO 2013/107980

(56) Documents cités:
- FR-A- 1 433 940
- US-A- 2 980 160
- US-A- 4 220 494

## Description

L'invention concerne les tambours d'assemblage d'ébauche de pneumatique.

Les tambours d'assemblage sont utilisés pour la réalisation d'une carcasse cylindrique destinée à faire partie de l'ébauche crue d'un pneumatique. On enroule sur le tambour, qui a une forme générale cylindrique, différents produits tels que de la gomme intérieure d'étanchéité, des tringles, diverses nappes de renfort textiles ou métalliques et d'autres produits de gomme. Au cours d'une phase ultérieure, on place une bande de roulement fabriquée séparément sur la carcasse après avoir donné à cette dernière la forme adaptée. L'association de la carcasse et de la bande de roulement forme un bandage. On cuit ensuite ce dernier pour vulcaniser la gomme et obtenir le pneumatique.

Le tambour présente un diamètre qui correspond à celui des jantes sur lesquelles seront montés les pneumatiques pour leur utilisation. Il est aussi agencé pour qu'on puisse diminuer son diamètre en le rétractant pour extraire la carcasse avant ou après conformation de cette dernière et avant ou après la pose de la bande de roulement. Un tambour permettant la mise en oeuvre de ces opérations est connu par exemple du document EP-2 072 240. Sa face externe est formée par des éléments cylindriques latéraux et des tuiles centrales recouvrant ces éléments. Lors de la construction de la carcasse, on dispose ses constituants sur les éléments et les tuiles.

Le positionnement axial de la carcasse est réalisé lors de l'assemblage par la pose de tringles destinées à faire partie du pneumatique, dans des gorges spécifiquement ménagées à cette fin sur le tambour. La distance séparant les deux gorges, c'est-à-dire la distance séparant les deux tringles, caractérise certaines dimensions du pneumatique final. Selon le modèle à fabriquer, on peut choisir la distance entre les gorges en rapprochant l'un de l'autre les éléments recouverts partiellement par les tuiles et réduire ainsi une longueur d'une portion de la face externe du tambour.

Toutefois, cet agencement du tambour ne permet pas de faire varier cette distance sur une grande amplitude. Pour réaliser des ébauches pour certains types de pneumatique, il faut donc changer les tuiles et les éléments. Cela implique d'une part de disposer d'un grand nombre de jeux de tuiles et d'éléments pour pouvoir fabriquer tous les types de pneumatiques souhaités, et d'autre part de fabriquer tous ces outillages et de gérer convenablement leurs stocks. De plus, le changement de cet outillage sur le tambour rend celui-ci inopérationnel, ce qui nuit à la productivité.

Le document US 2980160 - A divulgue un tambour de confection d'une ébauche de pneumatique comprenant des moyens pour varier la longueur axiale du tambour sans déranger la surface de confection du tambour.

Le document US 4220494 - A divulgue un tambour de confection de pneumatique dont la longueur axial et le diamètre peuvent être aisément modifiés.

Le document FR 1433940 - A divulgue un tambour de confection de pneumatique comprenant des organes disposés circonférentiellement autour d'un axe principal du tambour et montés mobiles en direction radiale, chaque organe portant des supports aptes à former une face externe du tambour, montés mobiles les uns par rapport aux autres suivant une direction radiale et montés coulissants par rapport à l'organe suivant une direction parallèle à l'axe, de façon à faire varier une dimension de la face externe suivant la direction parallèle à l'axe.

Un but de l'invention est de fournir un tambour ne présentant pas ces inconvénients.

A cet effet, on prévoit selon l'invention un tambour d'assemblage d'une ébauche de pneumatique comme défini dans la revendication 1, le tambour comprenant des organes disposés circonférentiellement autour d'un axe principal du tambour et montés mobiles en direction radiale à l'axe, chaque organe portant des supports :
- aptes à former une face externe du tambour,
- montés mobiles les uns par rapport aux autres sur l'organe suivant une direction radiale à l'axe,
- montés coulissants par rapport à l'organe suivant une direction parallèle à l'axe de façon à faire varier une dimension de la face externe suivant la direction parallèle à l'axe, et
- articulés les uns par rapport aux autres de sorte que, lorsqu'ils forment la face externe, ils sont en butée mutuelle pour demeurer immobiles sous l'effet d'une sollicitation s'exerçant en direction de l'axe.

Ainsi, la mobilité des éléments suivant la direction radiale permet de les faire coulisser pour diminuer ou augmenter la longueur de la face externe sur une grande amplitude. On peut donc, avec un même outillage, réaliser des ébauches pour un plus grand nombre de pneumatiques de types différents. Et on réduit l'outillage nécessaire à la fabrication des ébauches pour toute la gamme de pneumatiques souhaitée. De plus, le changement d'outillage n'étant plus nécessaire dans beaucoup de cas pour passer d'un type de pneumatique à un autre, on augmente la productivité.

Des formes préferentielles de l'invention sont definies dans les revendications dépendantes.

Le tambour selon l'invention pourra présenter en outre au moins l'une quelconque des caractéristiques suivantes :
- les supports sont montés mobiles de façon à faire varier la dimension de la face externe du tambour sans modifier un plus grand diamètre de cette face,
- les supports sont montés mobiles par rapport à l'organe de façon à faire varier un nombre de supports qui forment la face externe,
- les supports sont montés de façon à permettre à certains d'entre eux de coulisser par rapport à l'organe en restant immobiles les uns par rapport aux autres,
- les supports de l'organe sont montés de façon à permettre à certains d'entre eux d'avoir un mouvement de rotation autour d'un axe commun perpendiculaire à l'axe principal,
- les supports de l'organe forment au moins un groupe de supports attachés les uns aux autres indépendamment de l'organe,
- les supports de l'organe forment deux groupes situés de part et d'autre d'un plan méridien du tambour, les supports de chaque groupe étant attachés les uns aux autres indépendamment de l'autre groupe et de l'organe,
- les supports de l'organe se succèdent suivant la direction parallèle à l'axe en formant une file,
- chaque support distant d'une extrémité de la file relie à lui seul les uns aux autres les supports situés de part et d'autre du support,
- l'organe comprend au moins une roue ayant un axe perpendiculaire à l'axe principal et disposée pour que les supports s'enroulent sur la roue,
- chaque support est agencé pour permettre de faire varier une dimension circonférentielle à l'axe d'une partie du support formant la face externe,
- chaque support est apte à prendre une configuration dans laquelle il ne forme pas la face externe et sa dimension circonférentielle est inférieure à sa plus petite dimension circonférentielle lorsqu'il forme la face externe,
- chaque support comporte un corps et au moins une palette montée mobile par rapport au corps suivant une direction circonférentielle à l'axe principal du tambour,
- la ou chaque palette est montée rotative par rapport au corps,
- l'organe comprend une came apte à déplacer la ou chaque palette lors du coulissement du support par rapport à l'organe,
- la ou chaque palette d'un organe est apte à être en appui suivant la direction circonférentielle contre une palette d'un organe adjacent,
- l'organe comprend une tuile et les supports sont montés mobiles de façon à s'étendre en étant interposés entre la tuile et l'axe principal par référence à la direction radiale,
- chaque tuile est agencée pour permettre de faire varier une dimension circonférentielle à l'axe d'une partie de la tuile formant la face externe du tambour,
- chaque tuile d'un organe comporte un corps formant la face externe et au moins une tuile secondaire apte à former la face externe et montée mobile par rapport au corps suivant une direction circonférentielle à l'axe principal du tambour, et
- la tuile secondaire de chaque organe est apte à venir en appui suivant la direction circonférentielle contre celle de l'organe adjacent.

Nous allons maintenant décrire deux modes de réalisation du tambour selon l'invention à titre d'exemples non-limitatifs et en référence aux dessins annexés sur lesquels :
- la figure 1 est une vue en perspective d'un tambour selon un premier mode de réalisation de l'invention ;
- les figures 2 et 3 sont des vues en perspective de l'un des supports du tambour de la figure 1 respectivement en configurations étendue et rétractée ;
- les figures 4 et 5 sont deux vues en section axiale des supports des figures 2 et 3;
- les figures 6, 7 et 8 sont des vues en perspective de l'un des éléments du support de la figure 2, l'élément étant éclaté sur la figure 7 ;
- la figure 9 est une vue en perspective de l'une des chaînes d'éléments du support de la figure 2 ;
- la figure 10 est une vue analogue à la figure 2, à plus grande échelle et dont certains éléments ont été ôtés ;
- les figures 11 à 14 sont des vues en perspective de l'un des éléments illustré en positions étendue aux figures 11 et 13 et rétractée aux figures 12 et 14 ;
- la figure 15 est une vue du côté de la chaîne de la figure 9 ;
- la figure 16 est une vue des supports et des tuiles du tambour de la figure 1 ;
- les figures 17 et 18 sont deux vues en perspective d'un tambour selon un deuxième mode de réalisation de l'invention ; et
- la figure 19 est une vue en perspective de l'une des tuiles du tambour de la figure 17.

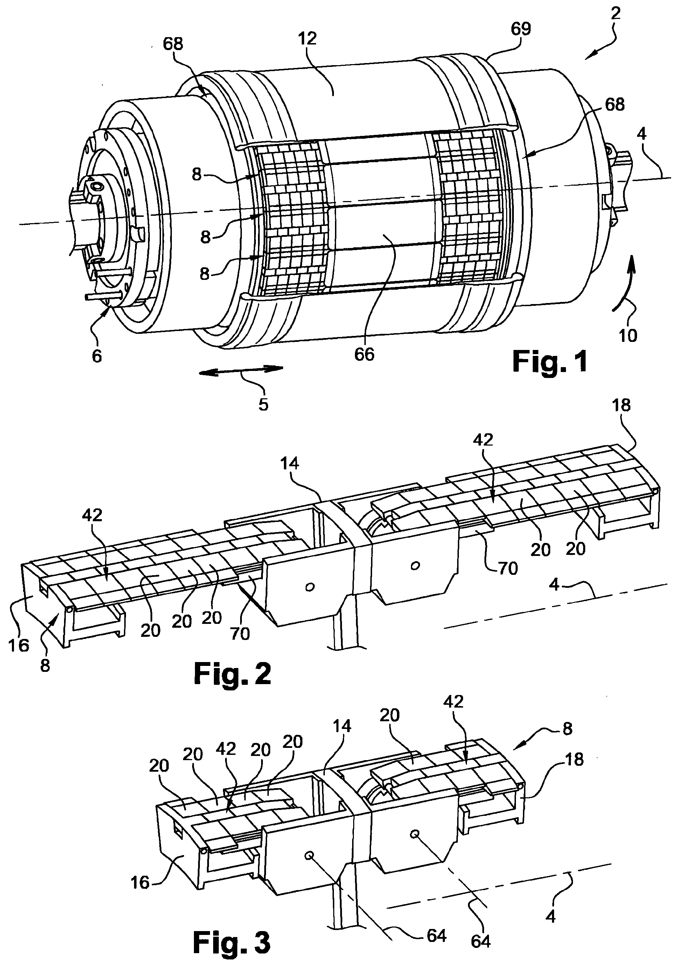

Nous allons décrire un premier mode de réalisation du tambour selon l'invention en référence aux figures 1 à 16.

Le tambour 2 présente un axe principal 4 et une symétrie générale de révolution autour de cet axe. Il comprend un bâti 6 et des organes 8 s'étendant chacun dans un plan radial à l'axe 4 en direction de cet axe et suivant une direction parallèle à cet axe, indiquée par la flèche 5. Les organes 8 sont disposés de sorte que leurs bords sont en coïncidence par référence à la direction 5 et que les organes se succèdent autour de l'axe 4 suivant une direction 10 circonférentielle à cet axe.

Le tambour sert à l'assemblage de carcasses cylindriques 12 pour des ébauches de pneumatique de roue. Ces roues peuvent être destinées à des véhicules tels que des véhicules de tourisme, des véhicules légers, des véhicules utilitaires, des véhicules de type poids lourds ou encore des engins de génie civil.

Les organes 8 sont montés sur le bâti 6, d'une façon connue en elle-même et qui ne sera pas détaillée ici, de manière à rendre chacun des organes 8 coulissant par rapport au bâti suivant la direction radiale à l'axe 4. Ainsi, en éloignant simultanément tous les organes de l'axe 4 ou au contraire en les en rapprochant, on peut augmenter ou réduire le diamètre total *D* du tambour.

Les organes 8 sont identiques entre eux et l'image les uns des autres par des rotations d'axe 4. Nous décrirons par conséquent l'un de ces organes seulement.

L'organe 8 comprend un magasin central 14 et deux embouts d'extrémité 16 et 18 distants du magasin suivant la direction 5. Les embouts 16 et 18 sont mobiles à coulissement l'un par rapport à l'autre et par rapport au magasin 14 suivant cette direction.

L'organe 6 comprend un groupe de supports 20 attachés les uns aux autres en formant une file, une extrémité de la file étant reliée au magasin 14 et l'autre à l'embout 16.

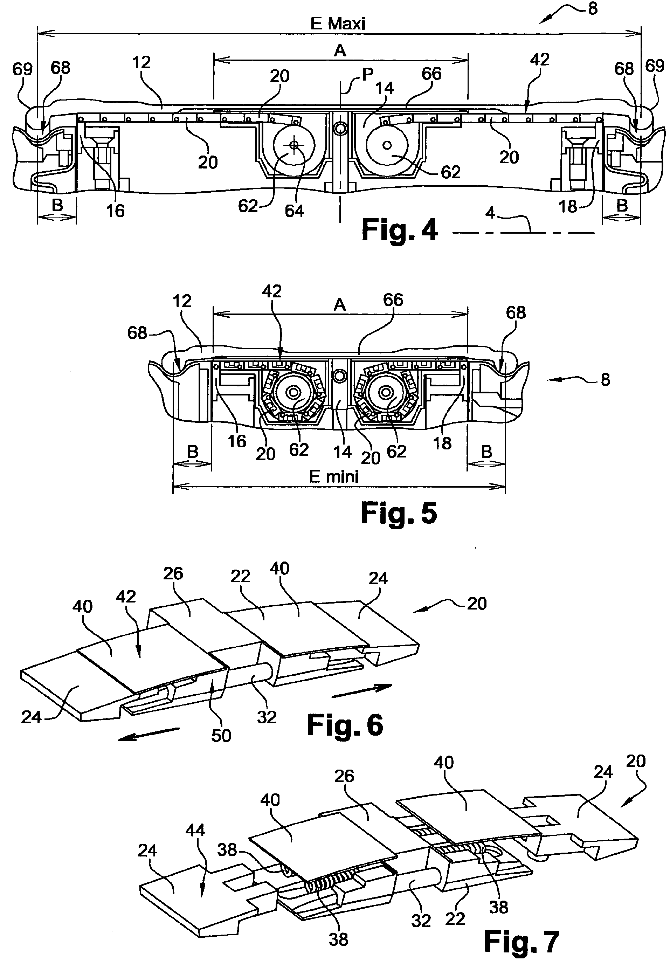

Tous les supports 20 du groupe sont identiques entre eux. En référence aux figures 6 et 7, chaque support 20 comprend un corps central 22 et deux palettes 24. Le corps 22 présente une forme générale de parallélépipède rectangle. Il présente une portion médiane 26 décalée d'un côté du corps pour être en saillie de ce dernier et ménager une cavité de l'autre côté du corps, comme illustré à la figure 5. Dans cette partie médiane s'étend un conduit cylindrique 30 à section circulaire. Dans la cavité s'étend un arbre cylindrique 32 également à section circulaire. La cavité et l'arbre s'étendent parallèlement l'un à l'autre et à la longueur du support. Ils sont prévus de sorte que la partie médiane d'un support 20 peut être enfilée sur l'arbre 32 du support 20 suivant dans la file de façon à les articuler directement l'un à l'autre. L'axe de cette articulation est perpendiculaire à l'axe 4.

Chaque palette 24 est montée rotative par rapport au corps 22 autour de l'axe 4. Elle est guidée à cette fin par complémentarité de forme entre la palette et le corps. De plus, la palette porte un taquet 34 monté mobile dans une gorge 36 traversant une paroi inférieure du corps 22 de sorte que le taquet s'étend en saillie de la face inférieure du corps hors de ce dernier. Le support 20 comprend pour chaque palette deux ressorts de rappel 38 tendant à repousser la palette 24 le plus loin possible de l'autre palette suivant la direction de l'arbre 32. Chaque ressort est en appui d'une part contre la palette et d'autre part contre le corps 22. Les deux limites extrêmes de la course de chaque palette par rapport au corps 22 sont définies par les extrémités de la gorge 36 contre lesquelles vient en butée le taquet 34. Le support 20 comprend en outre pour chaque palette une paroi 40 formant un couvre-joint et venant recouvrir la partie de la palette la plus proche du corps 22, une partie de ce dernier et les ressorts.

On a illustré à la figure 6 le support 20 dans sa configuration étendue dans laquelle les deux palettes donnent au support sa plus grande longueur en étant éloignées l'une de l'autre suivant la distance maximale.

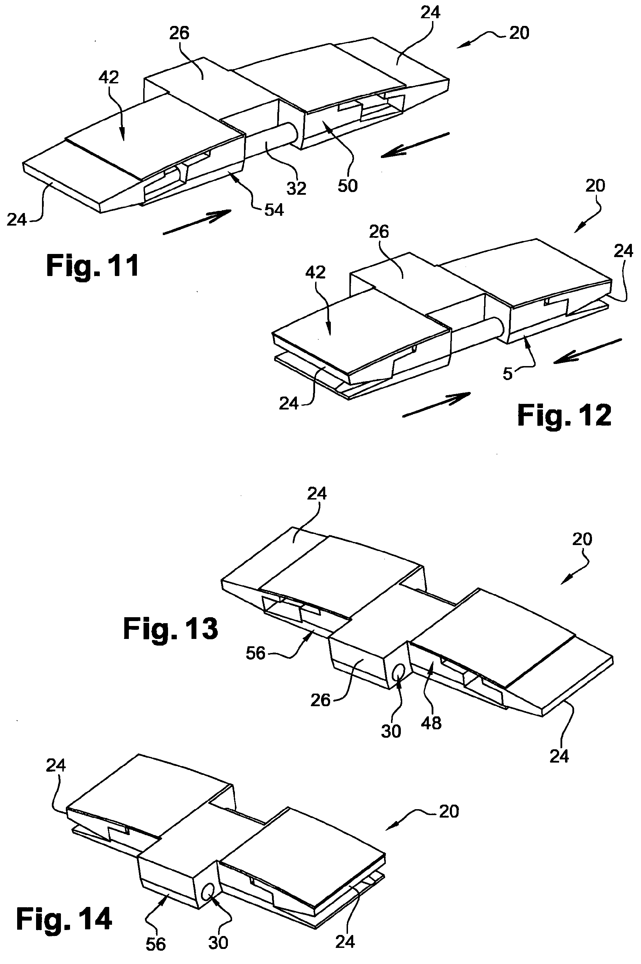

A la figure 11, on a illustré la configuration rétractée. Dans celle-ci, le support présente sa longueur minimale et les deux palettes sont séparées par la distance la plus courte compatible avec la situation dans laquelle le support forme la face externe.

Dans ces deux configurations, les palettes s'étendent en saillie du corps aux extrémités de celui-ci.

On a illustré à la figure 12 la configuration de rangement du support 20. Cette fois, les deux palettes s'étendent toutes entières à l'intérieur du corps sans en dépasser. Comme on le verra plus loin, dans une telle configuration, le support ne définit pas la face externe du tambour.

Le corps 22 du support présente une face externe 42 définie par la portion médiane 26 et les deux couvre-joints 40. Cette surface est cylindrique d'axe 4 et son diamètre est égal au diamètre d'assemblage de la carcasse. Les palettes présentent une face externe 44 également de forme cylindrique dont le rayon est égal à celui de la face 42 diminué de l'épaisseur des couvre-joints 40. La face 44 est coaxiale à la face 42 et permet le coulissement de chaque palette sous le couvre-joint.

Les supports 20 sont ici au nombre de neuf dans le groupe. Toutefois, ce nombre pourrait varier à la hausse ou à la baisse. Les supports sont articulés à la suite les uns des autres pour former en succession une file dont les deux extrémités longitudinales sont formées par deux respectifs des supports 20. Cette file est parallèle à l'axe 4. Chaque support 20 distant d'une extrémité de la file relie à lui seul l'un à l'autre les supports situés de part et d'autre du support. De cette façon, les supports 20 sont attachés les uns aux autres indépendamment de l'organe 8. Ils forment des maillons et leur groupe constitue une chaîne.

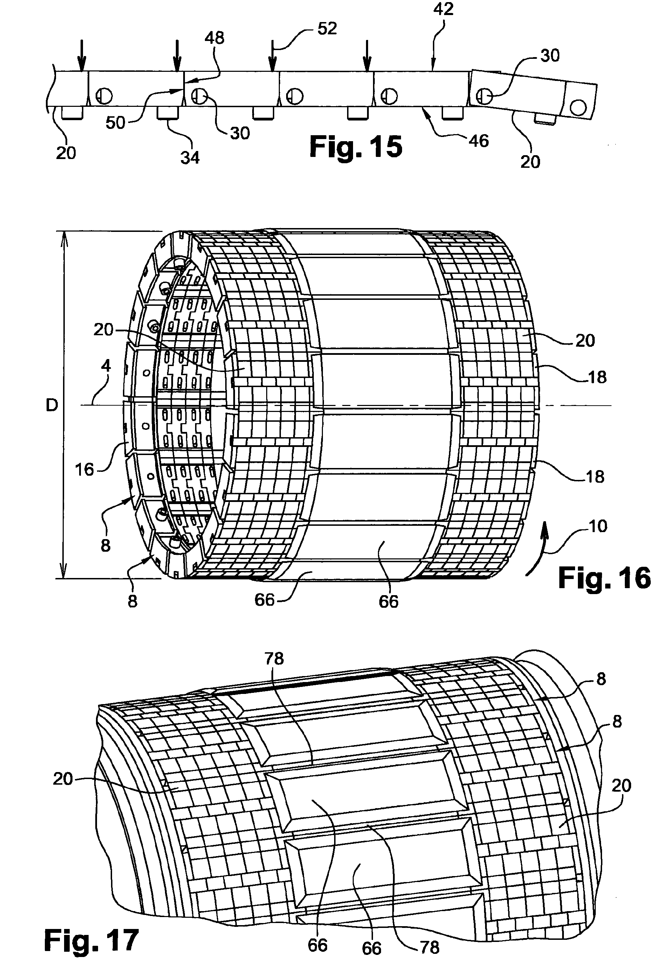

Comme illustré notamment à la figure 15, les conduits 30 et les arbres 32 sont placés plus près de la face inférieure 46 du support que sa face supérieure 42. Ils sont également positionnés de sorte qu'une face avant 48 de chaque support, proche du conduit est en contact surfacique avec une face arrière 50 du support adjacent, proche de l'arbre 32 lorsque les supports sont alignés avec leur face externe 42 dans la continuité les unes des autres. Dans ces conditions, les faces 48 et 50 sont en butée mutuelle dans leur portion la plus éloignée de l'axe. Si l'on exerce des sollicitations 52 en direction de l'axe 4, cette butée immobilise les supports les uns contre les autres et interdit toute flexion du groupe sous l'effet de la sollicitation. Ainsi, les supports résistent aux pressions de rouletage exercées sur les produits en gomme posés sur la périphérie du tambour. Les supports sont donc immobilisés en rotation relative dans un sens à partir de cette position.

A l'inverse, la portion des faces 48 et 50 la plus proche de l'axe 4 présente des chanfreins 54, 56 qui s'étendent l'un en regard de l'autre lorsque les faces 48 et 50 sont en contact. Ils forment un dégagement permettant la rotation relative des supports dans l'autre sens autour de l'arbre 32.

Le magasin 14 renferme une roue ou tambour 62 montée mobile à rotation autour d'un axe 64 perpendiculaire à l'axe 4 et tangent à la direction circonférentielle 10. A cette roue est attaché le support 20 qui forme l'extrémité la plus proche de la file. Les supports 20 sont mobiles à coulissement par rapport au magasin 14 suivant la direction 5. Lorsqu'on rapproche l'embout 16 du magasin 14, la file de supports s'enroule progressivement autour de la roue 62 et s'en déroule lorsqu'on éloigne l'embout. En l'espèce, les roues 62 sont manoeuvrées par des ressorts qui tendent à enrouler les supports 20 sur les roues lorsqu'on rapproche les embout 16 et 18 du magasin 14.

Le tambour 2 présente des gorges annulaires 68 d'axe 4 s'étendant de part et d'autre des organes 8 et destinées à recevoir des tringles circulaires 69 destinées à faire partie de la carcasse. On désigne par E la distance de l'une à l'autre des gorges suivant la direction 5. L'agencement précité des supports permet donc de faire varier continument cette distance pour lui faire prendre une valeur quelconque entre une distance maximale Emaxi correspondant à la configuration des figures 2 et 4 et une distance minimale Emini correspondant à celle des figures 3 et 5.

Dans la première configuration, aucun des supports 20 n'est enroulé sur la roue 62 et tous, à l'exception de celui contigu à la roue, forment une file rectiligne avec leurs faces externes 42 et 44 en continuité les unes des autres. Ces faces 42 du corps et des couvre-joints ainsi que les faces 44 des palettes, forment la face externe du tambour.

Dans la configuration des figures 3 et 5, la plupart des supports, ici au nombre de six, sont enroulés sur la roue 62 en couvrant plus des trois quarts de la circonférence de cette dernière. Seuls trois des supports sont encore en configuration rectiligne. De plus, tous les supports du groupe sont recouverts par une tuile 66, présentée plus loin, de sorte qu'aucun des supports ne forme la face externe du tambour.

Les supports 20 sont donc montés de façon à permettre à certains d'entre eux d'avoir un mouvement de rotation autour de l'axe commun 34 ou encore pour permettre à certains d'entre eux de coulisser par rapport au magasin 14 en restant immobiles les uns par rapport aux autres. En rapprochant plus ou moins l'embout 16 du magasin 14, on peut donc faire varier le nombre de supports 20 de l'organe qui forment la face externe du tambour et faire varier la longueur E sans modifier le plus grand diamètre *D*.

Le tambour présente un plan général de symétrie P illustré à la figure 4 qui passe par le magasin 14. Chaque organe 8 comprend donc un deuxième groupe de supports 20 formant une file dont une extrémité est fixée à l'embout 18 et dont l'autre est fixée pareillement à une autre roue 62 du magasin 14. Le tambour est configuré de sorte que les embouts se rapprochent simultanément du magasin 14 ou s'en éloignent en demeurant symétriques l'un de l'autre par rapport au plan P . Les organes du tambour portant les gorges 68 sont solidaires des embouts 16 et 18 dans leur coulissement suivant la direction 5. Les supports de chaque groupe sont attachés les uns aux autres indépendamment de l'organe et de ceux de l'autre groupe.

Chaque organe 8 comprend en outre une tuile 66 fixée rigidement au magasin 14, recouvrant les deux roues et s'étendant en direction des embout 16 et 18. Les seuls supports 20 qui ne sont pas recouverts par la tuile sont donc certains de ceux qui sont alignés. Lorsqu'on fait coulisser les embouts 16 et 18, les supports 20 glissent donc sous la tuile 66 en s'interposant entre celle-ci et l'axe en direction radiale, et certains d'entre eux s'enroulent autour des roues. La tuile 66 forme elle-aussi une partie de la face externe du tambour. Dans la configuration rétractée illustrée aux figures 3 et 5, tous les supports 20 s'étendent sous la tuile, ce qui permet d'avoir une distance B particulièrement courte entre chaque gorge 68 et l'extrémité correspondante de la tuile.

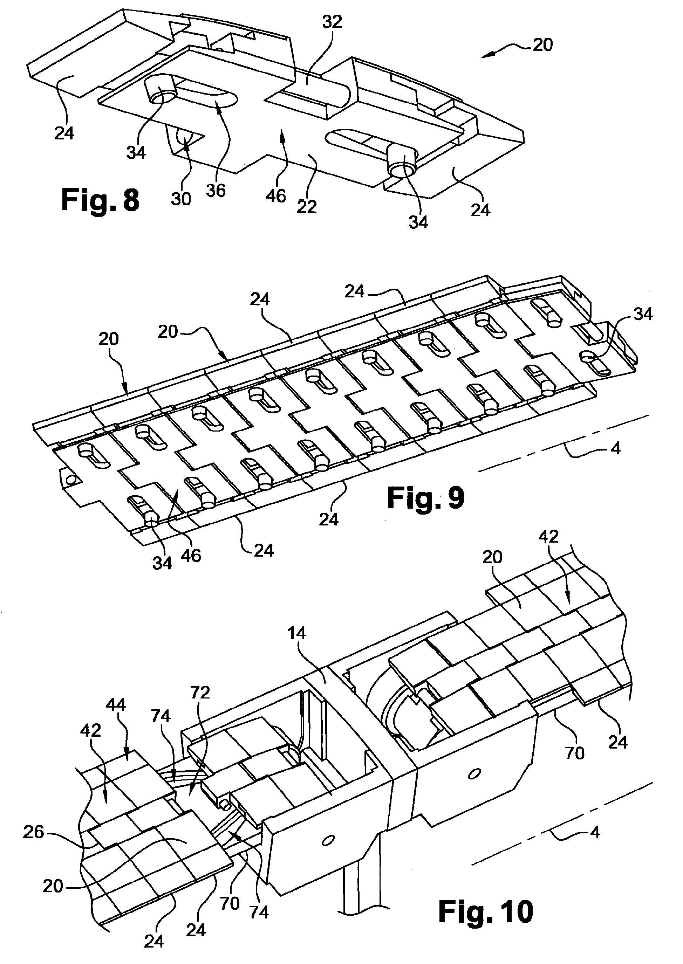

Le magasin 14 comprend deux plateformes 70 qui présentent chacune une face 72 s'étendant en regard des supports 20, entre ceux-ci et l'axe 4, et dans laquelle sont ménagées deux cames 74 formées par des gorges allant en se rapprochant l'une de l'autre à mesure que l'on parcourt la face 72 suivant la direction 5 en direction du magasin. Ces gorges sont ouvertes au bord de la plateforme opposée au magasin de façon à permettre aux taquets 34 de s'y introduire lorsque les supports 20 coulissent en direction du magasin. Les cames sont configurées de sorte que, au cours de ce coulissement, elles déplacent les taquets vers le centre du support de façon à placer ce dernier dans la configuration de rangement des figures 12 et 14 préalablement à son arrivée dans le magasin. Comme illustré à la figure 10, chaque support 20 pénètre donc dans le magasin en configuration de rangement. On peut prévoir que la roue présente des gorges annulaires maintenant les taquets dans cette position à l'encontre de l'effort de rappel exercé par les ressorts. On peut prévoir alternativement que les palettes viennent en appui contre les faces du magasin, ce qui là aussi maintient les supports en configuration de rangement. Les supports occupent donc leur configuration de rangement lorsqu'ils sont enroulés sur la roue. Lors de la sortie des supports 20 hors du magasin, les cames déplacent les taquets en direction inverse et sont aidées en cela par les ressorts de rappel pour replacer les supports 20 en position rétractée ou étendue.

L'organe 8 est configuré de sorte que les palettes situées d'un même côté de l'organe viennent en appui suivant la direction circonférentielle 10 contre les palettes de l'organe adjacent lorsque les organes donnent au tambour son diamètre nominal pour l'assemblage de la carcasse.

Les supports 20 définissent donc mutuellement deux portions de la face externe du tambour qui sont continues à la fois suivant les directions 5 et 10 et dépourvues de trou. Ces portions peuvent donc convenablement supporter les éléments de gomme formant la carcasse sans risquer de les altérer y compris sous l'effet de pressions de rouletage. Cette configuration des supports est la configuration étendue illustrée aux figures 6 et 13. Et cette continuité demeure lorsqu'on déplace les embouts pour modifier la dimension *E*.

Une fois la carcasse réalisée, pour l'extraire du tambour, on réduit le diamètre *D* de ce dernier en rapprochant les organes 8 de l'axe. Les palettes 24 des organes adjacents demeurent en appui les unes contre les autres tout en rentrant progressivement dans les corps 22 correspondants. Les tuiles 66 peuvent alors éventuellement venir en contact les unes avec les autres. Ce diamètre réduit du tambour permet l'extraction de la carcasse. Les supports 20 sont donc agencés pour faire varier une dimension suivant la direction circonférentielle 10 de la partie du support formant la face externe. La continuité précitée demeure au cours de cette rétractation.

On fait ici observer que les dimension *E* et *D* du tambour peuvent être réglées indépendamment l'une de l'autre et sans rompre la continuité précitée.

On obtient ainsi un tambour dont la partie médiane forme un cylindre expansible et rétractable et dont la longueur parallèlement à l'axe est réglable sur une grande amplitude. Ce cylindre permet la pose des produits en gomme et des renforts, le rouletage de ces produits et, après rétractation radiale du cylindre, l'extraction de la carcasse. Les portions de surface continues formées par les supports 20 favorisent le rouletage des produits dans ces zones du cylindre où le nombre des produits assemblés est le plus élevé.

Ce mode de réalisation a néanmoins pour inconvénient que, au diamètre nominal servant à la construction de la carcasse, les tuiles 66 sont distantes les unes des autres en direction circonférentielle comme illustré à la figure 16.

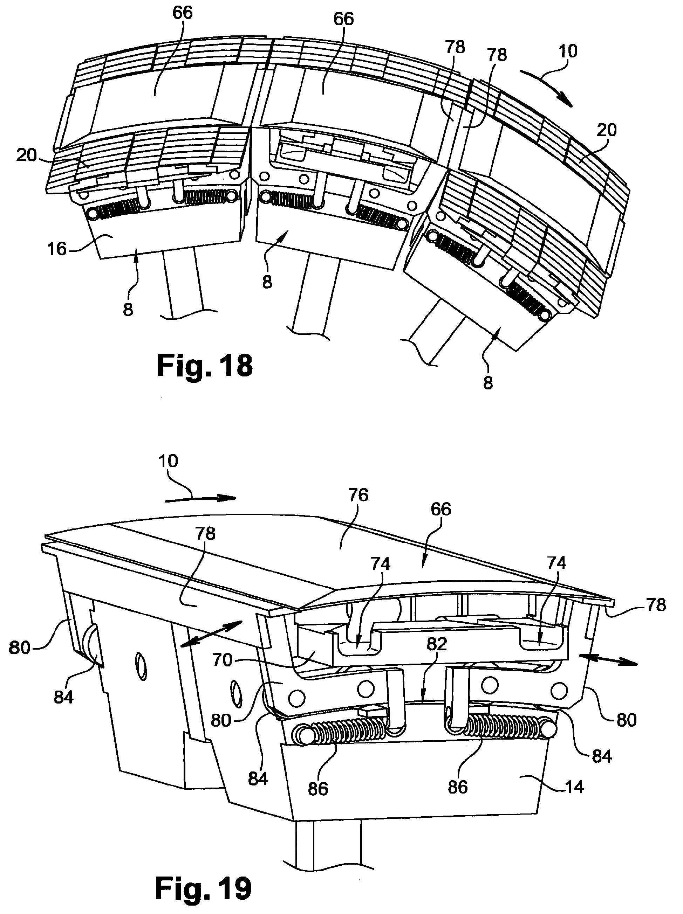

Le deuxième mode de réalisation du tambour que nous allons décrire en référence aux figures 17 à 19 vise à palier cet inconvénient. Ce tambour est en tous points identique au précédent, mis à part pour les caractéristiques qui suivent.

Cette fois, chaque tuile 66 comprend un corps ou tuile principal 76 rigidement fixé au magasin 14. Elle comprend également deux tuiles secondaires 78 montées chacune mobiles à rotation par rapport à la tuile principale 76 et par rapport à l'autre tuile 78 autour de l'axe 4. A cette fin, chaque tuile 78 est portée par deux étriers 80 s'étendant respectivement en regard des faces d'extrémité axiales du magasin 14, ces étriers ayant une forme générale en « L» et passant sous la plateforme 70. Le magasin 14 comprend une piste cylindrique d'axe 4 pour chaque paire d'étrier. Chaque étrier est muni de deux galets 84 roulant sur la piste 82. Deux ressorts de rappel 86 sont prévus qui relient une extrémité de chaque étrier au magasin 14 afin de tendre à éloigner la tuile secondaire 78 de la tuile 76 en la plaçant en saillie de cette dernière. Ces ressorts pourraient être remplacés par des cames.

Lorsque le tambour présente son diamètre nominal, les tuiles 76 s'étendent à distance les unes des autres et les tuiles 78 de chaque organe sont en appui suivant la direction circonférentielle contre celles de l'organe adjacent. On obtient ainsi, comme illustré à la figure 17, une continuité de surface tout autour de l'axe 4 sur la portion du cylindre définie par les tuiles. Cette fois, c'est donc toute la zone du tambour formée par les supports et les tuiles qui est intégralement continue selon les directions 5 et 10 en étant exempte de trou.

Lorsqu'on rétracte les organes 8 en vue d'extraire la carcasse, leur déplacementprovoque la rentrée partielle ou totale des tuiles secondaires 78 sous les tuiles principales 76. Pour certains diamètres, les tuiles secondaires demeurent en contact mutuel et les tuiles principales demeurent distantes les uns des autres. Pour le plus petit diamètre du tambour, les tuiles principales sont en contact les unes avec les autres. Le cylindre présente encore dans chacun de ces cas la continuité de matière précitée.

Dans ce mode de réalisation, la tuile 66 présente donc en direction circonférentielle 10 une dimension variable selon la position radiale occupée par la tuile.

Ce mode de réalisation permet d'assurer une continuité de support pour les produits en gomme même dans la zone médiane du cylindre, notamment en vue de l'opération de rouletage. On peut prévoir que les tuiles secondaires 78 demeurent en contact mutuel même dans le plus petit diamètre du cylindre, les tuiles 76 ne venant pas en contact les unes avec les autres.

Les tambours selon l'invention offrent une grande flexibilité dimensionnelle.

Bien entendu, on pourra apporter à l'invention de nombreuses modifications sans sortir du cadre de celle-ci. On pourrait prévoir que les supports 20 sont reliés les uns aux autres sans être articulés les uns aux autres, par exemple en étant montés sur une bande flexible commune. On pourrait prévoir que les supports 20 se déplacent en direction de l'axe 4 sans s'enrouler autour d'un support.

## Revendications

1. Tambour (2) d'assemblage d'une ébauche de pneumatique, comprenant des organes (8) disposés circonférentiellement autour d'un axe principal (4) du tambour et montés mobiles en direction radiale à l'axe, chaque organe portant des supports (20) :
- aptes à former une face externe du tambour,
- montés mobiles les uns par rapport aux autres sur l'organe suivant une direction radiale à l'axe,
- montés coulissants par rapport à l'organe suivant une direction parallèle à l'axe de façon à faire varier une dimension (E) de la face externe suivant la direction parallèle à l'axe, et
- articulés les uns par rapport aux autres de sorte que, lorsqu'ils forment la face externe, ils sont en butée mutuelle pour demeurer immobiles sous l'effet d'une sollicitation s'exerçant en direction de l'axe.

2. Tambour selon la revendications précédentes dans lequel les supports (20) sont montés mobiles de façon à faire varier la dimension (E) de la face externe du tambour sans modifier un plus grand diamètre (D) de cette face.

3. Tambour selon au moins l'une quelconque des revendications précédentes dans lequel les supports (20) sont montés mobiles par rapport à l'organe (8) de façon à faire varier un nombre de supports qui forment la face externe.

4. Tambour selon au moins l'une quelconque des revendications précédentes dans lequel les supports (20) de l'organe (8) sont montés de façon à permettre à certains d'entre eux d'avoir un mouvement de rotation autour d'un axe commun (64) perpendiculaire à l'axe principal (4).

5. Tambour selon au moins l'une quelconque des revendications précédentes dans lequel les supports (20) de l'organe (8) forment deux groupes situés de part et d'autre d'un plan méridien du tambour, les supports (20) de chaque groupe étant attachés les uns aux autres indépendamment de l'autre groupe et de l'organe (8).

6. Tambour selon au moins l'une quelconque des revendications précédentes dans lequel les supports (20) de l'organe (8) se succèdent suivant la direction parallèle à l'axe (4) en formant une file, de préférence chaque support (20) distant d'une extrémité de la file reliant à lui seul les uns aux autres les supports situés de part et d'autre du support.

7. Tambour selon au moins l'une quelconque des revendications précédentes dans lequel l'organe (8) comprend au moins une roue (62) ayant un axe (64) perpendiculaire à l'axe principal et disposée pour que les supports s'enroulent sur la roue.

8. Tambour selon au moins l'une quelconque des revendications précédentes dans lequel chaque support (20) est apte à prendre une configuration dans laquelle il ne forme pas la face externe et dans laquelle sa dimension circonférentielle est inférieure à sa plus petite dimension circonférentielle lorsqu'il forme la face externe.

9. Tambour selon au moins l'une quelconque des revendications précédentes dans lequel chaque support (20) comporte un corps (22) et au moins une palette (24) montée mobile par rapport au corps (22) suivant une direction (10) circonférentielle à l'axe principal (4) du tambour.

10. Tambour selon la revendication précédente dans lequel la ou chaque palette (24) est montée rotative par rapport au corps (22).

11. Tambour selon au moins l'une quelconque des revendications 9 à 10 dans lequel l'organe (8) comprend une came (70) apte à déplacer la ou chaque palette (24) lors du coulissement du support (20) par rapport à l'organe.

12. Tambour selon au moins l'une quelconque des revendications 9 à 11 dans lequel la ou chaque palette (24) d'un organe (8) est apte à être en appui suivant la direction circonférentielle contre une palette d'un organe adjacent.

13. Tambour selon au moins l'une quelconque des revendications précédentes dans lequel l'organe (8) comprend une tuile (66) et dans lequel les supports (20) sont montés mobiles de façon à s'étendre en étant interposés entre la tuile (66) et l'axe principal (4) par référence à la direction radiale.

14. Tambour selon la revendication précédente dans lequel chaque tuile (66) est agencée pour permettre de faire varier une dimension circonférentielle à l'axe d'une partie de la tuile formant la face externe du tambour.

15. Tambour selon au moins l'une quelconque des revendications 13 à 14 dans lequel chaque tuile d'un organe comporte un corps (76) formant la face externe et au moins une tuile secondaire (78) apte à former la face externe et montée mobile par rapport au corps suivant une direction circonférentielle à l'axe principal (4) du tambour, et de préférence apte à venir en appui suivant la direction circonférentielle contre la tuile secondaire de l'organe adjacent.

## Patentansprüche

1. Trommel (2) für den Aufbau eines Luftreifenrohlings, die Organe (8) umfasst, die in Umfangsrichtung um eine Hauptachse (4) der Trommel angeordnet sind und in radialer Richtung der Achse beweglich montiert sind, wobei jedes Organ Träger (20) trägt,
- die dafür ausgelegt sind, eine äußere Fläche der Trommel zu bilden,
- relativ zueinander an dem Organ längs einer radialen Richtung der Achse beweglich montiert sind,
- in Bezug auf das Organ längs einer Richtung parallel zu der Achse gleitend montiert sind, derart, dass eine Abmessung (E) der äußeren Fläche längs der Richtung parallel zu der Achse verändert wird, und
- aneinander angelenkt sind, derart, dass sie dann, wenn sie die äußere Fläche bilden, in gegenseitigem Anschlag sind, um unter einer Belastungswirkung, die in Richtung der Achse wirkt, unbeweglich zu bleiben.

2. Trommel nach dem vorhergehenden Anspruch, wobei die Träger (20) beweglich montiert sind, derart, dass die Abmessung (E) der äußeren Fläche der Trommel verändert wird, ohne einen größeren Durchmesser (D) dieser Fläche zu modifizieren.

3. Trommel nach einem der vorhergehenden Ansprüche, wobei die Träger (20) in Bezug auf das Organ (8) beweglich sind, derart, dass eine Anzahl von Trägern, die die äußere Fläche bilden, verändert wird.

4. Trommel nach einem der vorhergehenden Ansprüche, wobei die Träger (20) des Organs (8) in der Weise montiert sind, dass Bestimmten von ihnen ermöglicht wird, eine Drehbewegung um eine gemeinsame Achse (64) senkrecht zu der Hauptachse (4) ausführen zu können.

5. Trommel nach wenigstens einem der vorhergehenden Ansprüche, wobei die Träger (20) des Organs (8) zwei Gruppen bilden, die sich beiderseits einer Medianebene der Trommel befinden, wobei die Träger (20) jeder Gruppe unabhängig von der anderen Gruppe und von dem Organ (8) aneinander befestigt sind.

6. Trommel nach wenigstens einem der vorhergehenden Ansprüche, wobei die Träger (20) des Organs (8) längs der Richtung parallel zu der Achse (4) aufeinander folgen und dabei eine Reihe bilden, wobei vorzugsweise jeder Träger (20), der von einem Ende der Reihe entfernt ist, seinerseits nur die Träger, die sich beiderseits des Trägers befinden, miteinander verbindet.

7. Trommel nach wenigstens einem der vorhergehenden Ansprüche, wobei das Organ (8) wenigstens ein Rad (62) umfasst, das eine Achse (64) senkrecht zu der Hauptachse besitzt und dafür ausgelegt ist, dass sich die Träger auf das Rad aufwickeln.

8. Trommel nach wenigstens einem der vorhergehenden Ansprüche, wobei jeder Träger (20) dafür ausgelegt ist, eine Konfiguration einzunehmen, in der er nicht die äußere Fläche bildet und in der seine Umfangsabmessung kleiner ist als seine kleinste Umfangsabmessung, wenn er die äußere Fläche bildet.

9. Trommel nach wenigstens einem der vorhergehenden Ansprüche, wobei jeder Träger (20) einen Körper (22) und wenigstens eine Palette (24), die in Bezug auf den Körper (22) längs einer Umfangsrichtung (10) der Hauptachse (4) der Trommel beweglich montiert ist, umfasst.

10. Trommel nach dem vorhergehenden Anspruch, wobei die oder jede Palette (24) drehbar in Bezug auf den Körper (22) montiert ist.

11. Trommel nach wenigstens einem der Ansprüche 9 bis 10, wobei das Organ (8) einen Nocken (70) umfasst, der die oder jede Palette (24) während des Gleitens des Trägers (20) in Bezug auf das Organ verlagern kann.

12. Trommel nach wenigstens einem der Ansprüche 9 bis 11, wobei sich die oder jede Palette (24) eines Organs (8) längs der Umfangsrichtung an einer Palette eines benachbarten Organs abstützen kann.

13. Trommel nach wenigstens einem der vorhergehenden Ansprüche, wobei das Organ (8) eine Platte (66) aufweist und wobei die Träger (20) beweglich in der Weise montiert sind, dass sie sich eingebettet zwischen die Platte (66) und die Hauptachse (4) in Bezug auf die radiale Richtung erstrecken.

14. Trommel nach dem vorhergehenden Anspruch, wobei jede Platte (66) dafür ausgelegt ist, eine Umfangsabmessung in Bezug auf die Achse eines Teils der Platte, der die äußere Fläche der Trommel bildet, verändern zu können.

15. Trommel nach wenigstens einem der Ansprüche 13 bis 14, wobei jede Platte eines Organs einen Körper (76) aufweist, der die äußere Fläche bildet, und wenigstens eine sekundäre Platte (78) aufweist, die die äußere Fläche bilden kann und in Bezug auf den Körper längs einer Umfangsrichtung in Bezug auf die Hauptachse (4) der Trommel beweglich montiert ist und sich vorzugsweise längs der Umfangsrichtung an der sekundären Platte des benachbarten Organs abstützen kann.

## Claims

1. Tyre building drum (2) for assembling a green tyre, comprising members (8) arranged circumferentially about a main axis (4) of the drum and mounted with the ability to move in the direction radial to the axis, each member bearing supports (20) which are:
- able to form an external face of the drum,
- mounted with the ability to move relative to one another on the member in a direction radial to the axis,
- mounted with the ability to slide with respect to the member in a direction parallel to the axis so as to vary a dimension (E) of the external face in the direction parallel to the axis, and
- articulated with respect to one another so that when they are forming the external face they are in abutment with one another so as to remain immobile under the effect of a force applied in the direction of the axis.

2. Drum according to the preceding claim, in which the supports (20) are mounted with the ability to move so as to vary the dimension (E) of the external face of the drum without modifying a larger diameter (D) of this face.

3. Drum according to at least either one of the preceding claims, in which the supports (20) are mounted with the ability to move with respect to the member (8) so as to vary a number of supports that form the external face.

4. Drum according to at least any one of the preceding claims, in which the supports (20) of the member (8) are mounted in such a way as to allow some of them to have a rotational movement about a common axis (64) perpendicular to the main axis (4).

5. Drum according to at least any one of the preceding claims, in which the supports (20) of the member (8) form two groups situated one on each side of a meridian plane of the drum, the supports (20) of each group being attached to one another independently of the other group and of the member (8).

6. Drum according to at least any one of the preceding claims, in which the supports (20) of the member (8) follow on from one another in the direction parallel to the axis (4) to form a row, each support (20) distant from one end of the row preferably on its own connecting together the supports situated on each side of the support.

7. Drum according to at least any one of the preceding claims, in which the member (8) comprises at least one wheel (62) having an axis (64) perpendicular to the main axis and which wheel is arranged such that the supports wind onto the wheel.

8. Drum according to at least any one of the preceding claims, in which each support (20) is able to adopt a configuration in which it does not form the external face and in which its circumferential dimension is smaller than its smallest circumferential dimension when it is forming the external face.

9. Drum according to at least any one of the preceding claims, in which each support (20) comprises a body (22) and at least one vane (24) mounted with the ability to move with respect to the body (22) in a direction (10) circumferential to the main axis (4) of the drum.

10. Drum according to the preceding claim, in which the or each vane (24) is mounted with the ability to rotate with respect to the body (22).

11. Drum according to at least either one of Claims 9 and 10, in which the member (8) comprises a cam (70) able to move the or each vane (24) as the support (20) slides with respect to the member.

12. Drum according to at least any one of Claims 9 to 11, in which the or each vane (24) of a member (8) is able to rest in the circumferential direction against a vane of an adjacent member.

13. Drum according to at least any one of the preceding claims, in which the member (8) comprises a tile (66) and in which the supports (20) are mounted with the ability to move so that they can extend as an interposition between the tile (66) and the main axis (4) with reference to the radial direction.

14. Drum according to the preceding claim, in which each tile (66) is designed to allow the variation in a dimension circumferential to the axis of part of the tile that forms the external face of the drum.

15. Drum according to at least either one of Claims 13 and 14, in which each tile of a member comprises a body (76) forming the external face and at least one secondary tile (78) able to form the external face and mounted with the ability to move with respect to the body in a direction circumferential to the main axis (4) of the drum, and preferably able to come to rest in the circumferential direction against the secondary tile of the adjacent member.
